# EUROPEAN PATENT SPECIFICATION

(11) **EP 2 681 983 B1**
(45) Date of publication and mention of the grant of the patent: **04.03.2015**
(21) Application number: 13171401.6
(22) Date of filing: 11.06.2013
(51) Int. Cl.: A01B 71/06, B60K 25/06, F16H 9/04

(54) **A Power Take-off Device Connectable to a Tractor**
An einen Traktor anschließbare Kraftübertragungsvorrichtung
Dispositif de prise de puissance pouvant être relié à un tracteur

(30) Priority: 03.07.2012 IT RE20120046
(43) Date of publication of application: 08.01.2014
(73) Proprietor: Ognibene, Olmes, 42011 Bagnolo in Piano (Reggio Emilia) (IT)
(72) Inventor: Ognibene, Olmes, 42011 Bagnolo in Piano (Reggio Emilia) (IT)
(74) Representative: Corradini, Corrado

(56) References cited:
- EP-A1- 1 166 611
- DE-A1-102008 001 615
- US-A- 2 113 917
- US-A- 5 041 062

## Description

### TECHNICAL FIELD

The present invention relates to a power take-off device connectable to a tractor.

In more detail, the invention relates to a power take-off device connectable to the output shaft of a tractor, for example for agricultural or industrial use, for multiplying attachment points of various work tools, such as a wood hewer, agricultural tools or other suitable machinery.

### PRIOR ART

As is known, a tractor of the type commonly used in the agricultural field, comprises an output shaft or a power take-off, which is suitable for activating in rotation, for example by means of a universal joint or another transmission organ, an input shaft of a work tool, such as for example a miller, a cutting device, hydraulic pumps or pumping means for various machines or other users of known type.

The output shaft conventionally rotates at an angular velocity of about 550 revolutions per minute or about 1100 revolutions per minute.

Generally, a single work tool can be associated to the output shaft, for example with the interposing of a special reducer or multiplier of the number of revolutions, according to the applicational needs.

When the output shaft of the tractor has to draw in rotation a hydraulic pump, for example, of a hydraulic wood hewer or another like tool, according to the applications or the hewer used, it is necessary to vary the number of revolutions of the pump from 550 to 2000 revolutions per minute, for example by means of a suitable gear transmission box which is interposed between the tool and the output shaft of the tractor.

The devices of known type are not without drawbacks, among which not least is the fact that whenever more than one tool is to be used, for example a plurality of hewers or a plurality of agricultural tools, they have to be selectively attached to the power take-of of the tractor, with consequent time delays and operative loss on the part of the user.

Further, for those applications requiring a change of the number of revolutions of the user shaft, the predisposing of specifically- and suitably-sized reducers or multipliers for the desired application makes their use uneconomical and unwieldy.

US 5 041 062 A discloses a multiple drive power take-off gear assembly.

An aim of the present invention is to obviate the above-mentioned drawbacks in the prior art, with a solution that is simple, rational and relatively inexpensive.

These aims are attained by the characteristics of the invention as it is set out in the independent claim. The dependent claims delineate preferred and/or especially advantageous aspects of the invention.

### BEST WAY OF CARRYING OUT THE INVENTION

In particular, the invention provides a power take-off device connectable to a tractor having a power take-off, which comprises a support frame fixable to a tractor and suitable for rotatably supporting at least an input shaft for taking drive from the power take-off of the tractor and at least a first output shaft suitable for activating at least a work tool.

In the invention, the device comprises at least a second output shaft, parallel to the first output shaft and suitable for activating at least a further work tool, and drive transmission means interposed between the input shaft and the second output shaft.

Thanks to this solution, the number of power take-offs on the tractor can be multiplied such as even contemporaneously to provide a plurality of attachments points for different tools.

This solution is especially advantageous when more than one tool is required to be used, for example more than one wood hewer or more than one agricultural tool or another tool besides, drawn by a single tractor.

An aspect of the invention is, further, that the drive transmission means comprise at least a drive pulley keyed on the input shaft and at least a driven pulley associated to the second output shaft, and a flexible organ loop-wound on itself for transmission of the drive from the drive pulley to the driven pulley. Thanks to this solution the various output shafts of the device can be kept at a congruent distance such as to make it possible to associate a plurality of tools to the device, including tools of considerable dimensions, in a way that is simple and functional.

The device also comprises a pair of the drive pulleys connected, by means of respective flexible organs, to a respective pair of the driven pulleys, the driven pulleys of the pair being made selectively solid in rotation with the second output shaft via selection means, for example of a type having a manually-activatable sleeve selector.

In this way, the angular velocity of rotation of the second output shaft can be varied according to requirements.

For example, the angular velocity of the second output shaft can be varied between a first and a second angular velocity, for example greater than the angular velocity of the input shaft respectively by a multiplication factor of 2 and 4.5.

Two of the second output shafts are advantageously present in the device, parallel to one another and connected in the same way as described above to the input shaft, thus providing overall up to three power take-offs for respective tools activatable even at the same time by the same power take-off of the single tractor.

### BRIEF DESCRIPTION OF THE DRAWINGS

Further characteristics and advantages of the invention will emerge from a reading of the following description provided by way of non-limiting example, with the aid of the figures illustrated in the appended figures of the drawings.

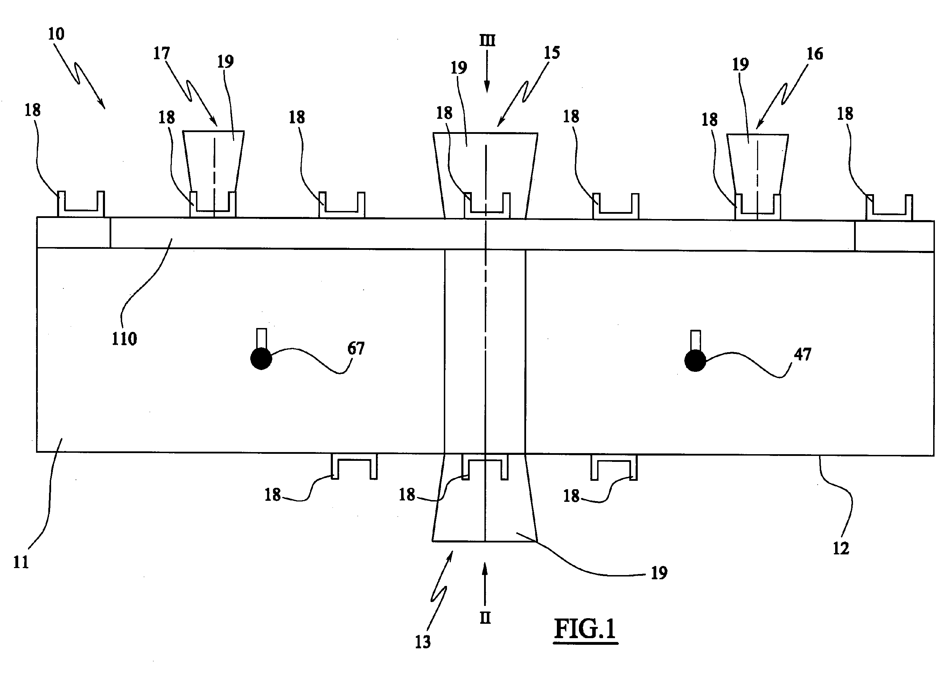

Figure 1 is a plan view of the power take-off device according to the invention.

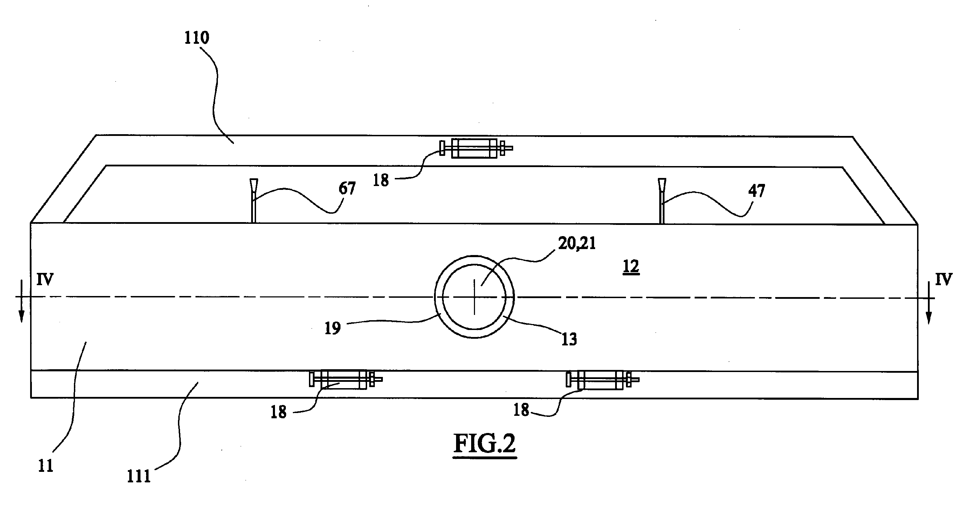

Figure 2 is a rear view from II of figure 1.

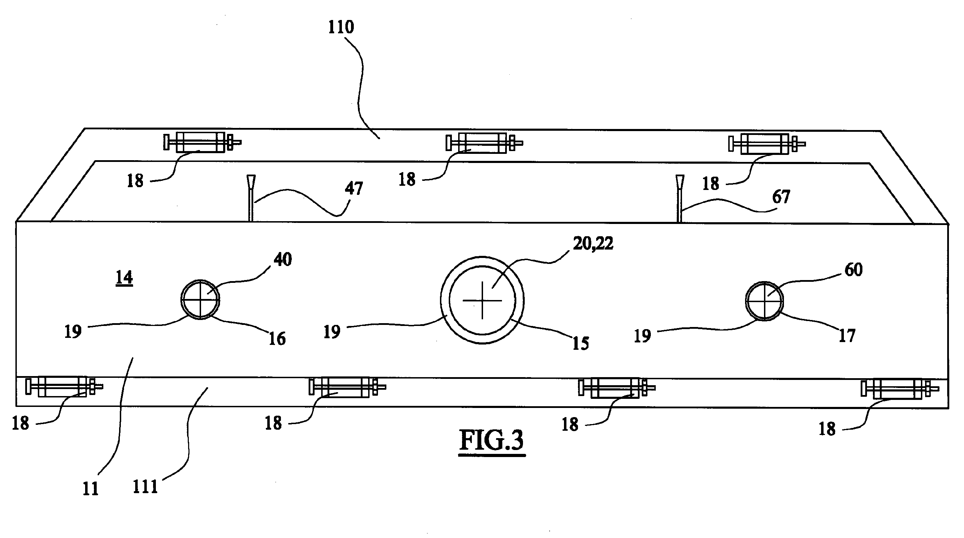

Figure 3 is a front view from III of figure 1.
Figure 4 is the schematic section along IV-IV of figure 3.

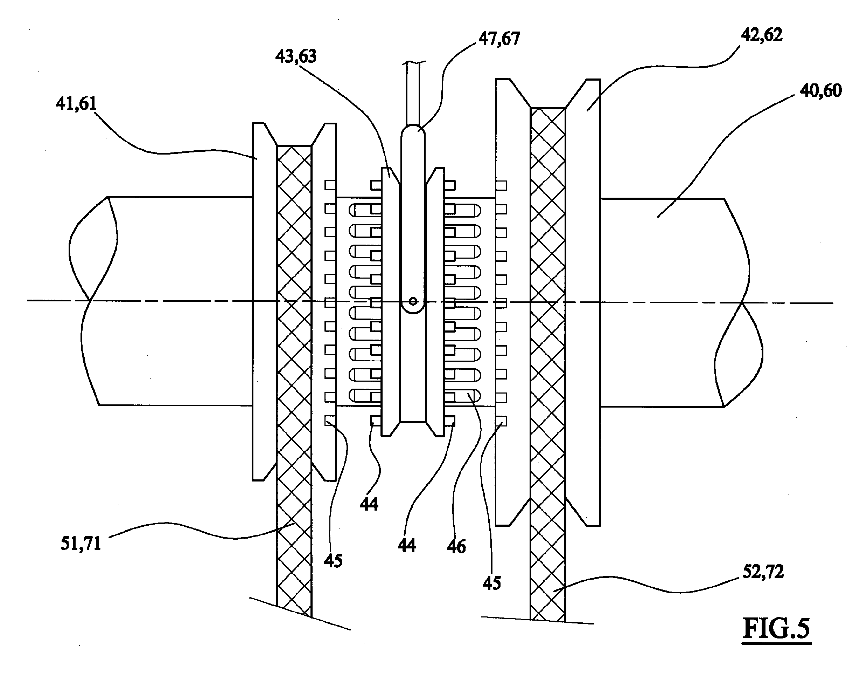

Figure 5 is an enlarged detail of figure 4.

### BEST WAY OF CARRYING OUT THE INVENTION

With particular reference to these figures, reference numeral 10 denotes a power take-off connectable to a tractor, such as a tractor for agricultural or industrial use, not shown in the figures as of known type.

As known to experts in the field, a tractor has a power take-off, of the type having a drive shaft and a three-point hitch suitable for coupling to implements or machines such as ploughs, cutters, diggers, hewers, band saws or similar working tools.

The device 10 comprises a box casing 11 substantially closed and internally hollow, for example having a parallelepiped shape, so that the longitudinal axis thereof is arranged, once attached to the tractor, substantially horizontal and perpendicular to the advancement direction of the tractor.

The box casing 11 comprises a rear wall 12, suitable in use for facing the rear of the tractor, which is provided with an inlet hole 13, through-passing and substantially positioned in a central position, and a front wall 14 opposite the rear wall 12, having a first outlet hole 15 also through-passing and arranged substantially coaxially with the inlet hole 13.

The front wall 14 further comprises a second outlet hole 16, placed, for example at the side of the first outlet hole 15.

The front wall 14 further comprises a third outlet hole 17, located by a side of the first outlet hole 15, on an opposite side with respect to the second outlet hole 16.

In the illustrated example the three outlet holes 15,16,17 are substantially aligned along the central longitudinal axis of the front wall 14.

Further, the three outlet holes 15,16,17 exhibit a circular shape and the second and the third outlet hole 16, 17 exhibit a minimum interaxis distance of 730 mm with respect to the first outlet hole 15.

The box casing 11 comprises, around each outlet hole 15,16,17 as well as the inlet hole 13, a three-point hitch formed by three forks 18 or like mechanical organs, which are positioned with respect to the respective holes of the box casing 11 in a way known to the skilled person.

In the example shown, the fork 18 located at the upper vertex of the three-way hitch is made of a cross member 110 fixed superiorly to the box casing 11 and arranged with the longitudinal axis thereof substantially parallel to the longitudinal axis of the box casing 11, while the lower forks 18, for example, are realised on a reinforcement bar 111 parallel to the cross member 110 and fixed inferiorly to the box casing 11.

Respective shanks 19 are also provided around each hole 13, 15, 16 and 17 of the box casing 11, fixed coaxially to the respective holes 13, 15, 16 and 17, which shanks 19 protrude externally of the casing 11 and have a substantially divergent truncoconical shape.

The device 10 comprises a main shaft 20 at least partially housed within the box casing 11, a first end portion 21 of which protrudes there-from through the inlet hole 13 and defines an input shaft of the device 10.

The input shaft 21 is connectable, via a transmission unit known as a universal joint or equivalent system, to the tractor PTO.

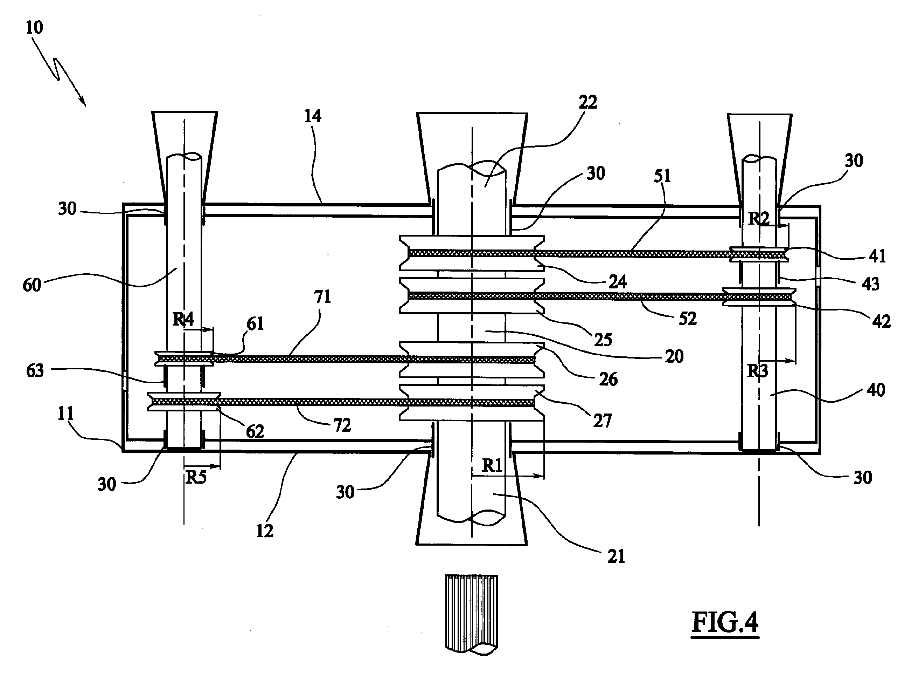

The main shaft 20 is coaxially inserted in the inlet hole 13 and is rotatably supported by the box casing with the interposition of suitable bearings 30, shown only schematically in figure 4.

The second end portion 22 of the main shaft 20 is inserted in the first outlet hole 15 and protrudes from the box casing 11; in practice, the second portion 22 defines a first output shaft that provides a first power take-off of the device 10, the angular velocity of which, for example, is the same as the angular velocity of the tractor PTO, the first output shaft 22 being the extension of the input shaft 21.

A plurality of drive pulleys is keyed to the intermediate portion of the main shaft 20, interposed between the first portion 21 and the second portion 22, which plurality in the present example is 4 in number, the pulleys being denoted respectively by reference numbers 24,25,26 and 27; the pulleys are solid in rotation with the main shaft 20.

For example, the four drive pulleys 24,25,26 and 27 all have the same radius R1 and are coaxial and aligned along the rotation axis of the main shaft 20. The device 10 further comprises a second output shaft right 40 (with reference to the arrangement of figure 4) an end portion of which protrudes from the second outlet hole 16 and is supported, inside the box casing 11, by respective bearings 30.

The end portion of the right second output shaft 40 which protrudes from the second outlet hole 16 provides a second power take-off of the device 10 which can rotate with an angular velocity, for example, that is different from the angular velocity of the first output shaft 22.

In practice, a first driven pulley 41 is associated idle in a central portion of the right second output shaft 40, which first driven pulley 41 is rotated via a first belt 51 by one of the drive pulleys 24,25,26 and 27, in the example drive pulley 24.

In the central portion of the right second output shaft 40 of the illustrated example, a second driven pulley 42 is also associated idle and rotated via a second belt 52 by one of the driving pulleys 24,25,26 and 27, in the example drive pulley 25.

The first and the second driven pulleys, respectively 41 and 42, are selectively made solid in rotation with the right second output shaft 40 by selection means.

The selection means, in the present example, comprise a sleeve 43 rigidly associated in rotation and free in translation to the right second output shaft 40 and exhibiting front teeth 44, on both axially opposite surfaces, which are destined to engage respective seatings 45 fashioned on the facing walls of the first and second driven pulleys 41,42, such as to rotate the pulleys 41, 42. The central portion of the right second output shaft 40, interposed between the two driven pulleys 41 and 42, exhibits for example a grooved profile 46 (or a tab or other equivalent technical device), so that the sleeve 43, for example affording a correspondingly-grooved central hole, can slide axially along the right second output shaft 40, at least between a first position, in which the front teeth 44 engage the seatings 45 fashioned in the first driven pulley 41, making the right second output shaft 40 solid in rotation with the first driven pulley 41, and at least a second position, in which the front teeth 44 engage the seatings 45 formed in the second driven pulley 42, making the right second output shaft 40 solid in rotation with the second driven pulley 42.

The first driven pulley 41, for example, has a radius R2 = 1/4.5 R1.

The second driven pulley 42, for example, has a radius R3 = 1/2 R1.

In this way, when the right second output shaft 40 is rotated by the main shaft 20 via the first driven pulley 41, it rotates at an angular speed that is 4.5 times greater than the tractor PTO, while when the right second shaft output 40 is rotated by the main shaft 20 via the second driven pulley 42 it rotates at an angular velocity of twice the PTO of the tractor.

The device 10 comprises actuating means for activating the sleeve 43 in translation along the right second output shaft between the first position and the second position.

The actuating means for example comprise a lever 47 a fork-shaped end of which is fixed to the sleeve 43 and a free end of which protrudes from a hole in the box casing 11 in order to be manually activated.

Likewise, on the opposite side of the right second output shaft 40 with respect to the first output shaft 22, the device 10 comprises a left second output shaft 60 an end portion of which protrudes from the third outlet hole 17 and is supported, inside the box casing 11 by means of respective bearings 30.

The end portion of the left second output shaft 60 which protrudes from the third exit hole 17 provides a third power take-off of the device 10 which can rotate with an angular velocity, for example, different from the angular velocity of the first output shaft 22.

In practice, a further first driven pulley 61 is associated idle to a central portion of the second output shaft 60, which pulley 61 is rotated, via a first belt 71, by one of the drive pulleys 24,25,26 and 27, in the illustrated example the drive pulley 26.

In the illustrated example, a further second driven pulley 62 is associated to the central portion of the left second shaft output 60, which second driven pulley 62 is rotated via a second belt 72 by one of the drive pulleys 24,25,26 and 27, in the example the drive pulley 27.

The first and the second driven pulleys, respectively 71 and 72, are selectively made solid in rotation with the left second output shaft 60 by further selection means.

In the illustrated example, the selection means comprise a sleeve 63 rigidly associated in rotation and free in translation to the left second output shaft 60 and equipped with frontal teeth 64, on both axially opposite surfaces, suitable for engaging respective seatings 65 fashioned on the facing walls of the first and second driven pulleys 61, 62, such as to rotate the pulleys 61, 62.

The central portion of the second output shaft left 60, interposed between the two driven pulleys 61 and 62, exhibits for example a grooved profile 66 (or a tab or other equivalent technical device), so that the sleeve 63, for example exhibiting a correspondingly-grooved central hole, can slide axially along the left second output shaft 60, between at least a first position, in which the front teeth 64 engage the seatings 65 fashioned in the first driven pulley 61, making the left second output shaft 60 solid in rotation with the first driven pulley 61 itself, and at least a second position, in which the front teeth 64 engage the seatings 65 fashioned in the second driven pulley 62, making the left second output shaft 60 solid in rotation with the second driven pulley 62. The first driven pulley 61, for example, exhibits a radius R4 = R2 = 1/4.5 R1. The second driven pulley 62, for example, exhibits a radius R3 = R5 = 1/2 R1.

In this way, when the left second output shaft 60 is rotated by the main shaft 20 via the first driven pulley 61, it is operating at an angular speed of 4.5 times greater than the tractor PTO, whereas when the left second shaft output 60 is rotated by the main shaft 20 via the second driven pulley 62 it is rotating at an angular velocity of twice the tractor PTO.

The device 10 comprises actuating means adapted to activate the sleeve 63 in translation along the right second output shaft between the first position and the second position.

The actuating means, for example, comprise a lever 67 a fork-shaped end of which is fixed to the sleeve 63 and the free end of which protrudes from a hole in the box casing 11 so as to be manually activated.

In the illustrated example, the first output shaft 22, the right second output shaft 40 and the left second output shaft 60 are parallel to one another, located on a substantially horizontal plane, substantially parallel to the advancement direction of the tractor and aligned along the longitudinal axis of the box casing 11; also, the interaxial distance between the first output shaft 22 and the right second shaft 40 and left second shaft 60 is at least greater than 730 mm.

Different and equivalent arrangements of the output shafts 22,40,60 are not excluded, depending on construction requirements.

In the light of the above, the device 10 operates as follows.

First the input shaft 21 must be made solid in rotation with the tractor PTO, for example by connecting them via a universal joint.

The tractor PTO rotates the input shaft 21 with an angular velocity normally of 550 rpm or 1100 rpm, depending on the tractor.

The rotation imparted to the input shaft 21 results in a rotation at equal angular velocity of the first output shaft 22, as the input shaft 21 and the first output shaft 22 constitute the same main shaft 20.

A first work tool is connectable to the first output shaft 22, using means known to an expert in the sector, for example, which work tool does not require a speed greater than the number of revolutions provided by the tractor PTO.

In a case where the use of the single power take-off of the device 10 (first output shaft 22) is required, it is sufficient to operate the lever 47 and the lever 67 so that the respective sleeves 43 and 63 shift into an intermediate position between the first position and the second position, in which the sleeve 43, 63 does not engage either of the first and second driven pulleys, respectively 41, 42 and 61, 62.

If instead a second power take-off is required for a further tool, which for example requires a greater number of turns than the tractor PTO provides, it is sufficient to actuate one of the sleeves 43, 63 to bring it into the first or second position thereof, to make the second output shaft right 40 or 60 solid in rotation, respectively, with one of the first and the second driven pulleys 41, 61 and 42, 62 depending on the angular velocity demanded by the tool.

Obviously, if a third power take-off for a further tool is required, it is sufficient to shift both sleeves 43 and 63 into the first or second position, so as to rotate both the right second output shaft 40 and the left second output shaft 60.

Lastly, the transmission ratio between the input shaft 9 and any one of the output shafts 22, 40 and 60 may be different to what is described above, as the output shafts themselves may have small angular velocities, multiplied by or equal to the angular speed of the tractor PTO according to different construction requirements.

The invention thus conceived is susceptible to numerous modifications and variations, all falling within the inventive concept.

Furthermore all details can be replaced with other technically-equivalent elements.

In practice the materials used, as well as the shapes and dimensions, may be any according to requirements without thereby forsaking the protective scope of the following claims.

## Claims

1. A power take-off device (10) connectable to a tractor provided with a power take-off, which comprises a support frame (11) fixable to a tractor and suitable for rotatably supporting at least an input shaft (21) suitable for taking drive from the tractor power take-off and at least an output shaft (22) suitable for activating at least a work tool, at least a second output shaft (40, 60) being provided, parallel to the first output shaft (22) and suitable for activating at least a further work tool, and drive transmission means (24-27, 40,41,51,52, 61,62,71,72) interposed between the input shaft (21) and the second output shaft (40, 60), wherein the transmission means comprise at least a drive pulley (24-27) keyed on the input shaft (21) and at least a driven pulley (41,42,61,62), **characterised by** comprising at least a pair of the drive pulleys (24,25;26,27) connected, by means of respective flexible organs (51,52;71,72) to a respective pair of the driven pulleys (41,42;61,62), the driven pulleys (41,42;61,62) of the pair being made selectively solid in rotation with the second output shaft (40, 60) via selection means (43,63).

2. The device (10) of claim 1, wherein the selection means comprise at least a sleeve (43, 63) associated solidly in rotation and free in translation to the second output shaft (40, 60) and provided with frontal cogs (44, 64) suitable for engaging respective seatings (45, 65) realised on the driven pulleys (41,42;61,62) for drawing the second output shaft in rotation.

3. The device (10) of claim 2, **characterised in that** it comprises activating means (47, 67) suitable for activating the sleeve (43, 63) in translation along the second output shaft (40,60) from a first position in which it enmeshes with one of the driven pulleys (41, 61) and a second position in which it enmeshes with the other of the driven pulleys (42, 62).

4. The device (10) of claim 3, wherein the driven pulleys (41,42;61,62) exhibit different diameters such that the input shaft (21), when connected to the second output shaft (40, 60) via one of the driven pulleys (41, 61), imparts on the second output shaft a first angular velocity and, when connected to the second output shaft (40, 60) by the other of the driven pulleys (42, 62), imparts on the second output shaft a second angular velocity that is different from the first angular velocity.

5. The device (10) of claim 4, wherein the first and second angular velocities of the second output shaft (40, 60) are greater than the angular velocity of the input shaft (21), respectively by a multiplication factor of 2 and 4.5.

6. The device (10) of claim 1, wherein the interaxis between the first output shaft (22) and the second output shaft (40, 60) is substantially not less than 730 mm.

7. The device (10) of any one of the preceding claims, **characterised in that** it comprises a pair of the second output shafts (40, 60) parallel to the first output shaft (22).

## Patentansprüche

1. Nebenantriebsvorrichtung (10), die an eine mit einem Nebenantrieb ausgestattete Zugmaschine anschließbar ist und die einen Stützrahmen (11) umfasst, der an eine Zugmaschine fixierbar ist und geeignet ist zum drehbaren Stützen mindestens einer Antriebswelle (21), die zum Abnehmen von Antriebskraft vom Zugmaschinennebenantrieb geeignet ist, und mindestens einer Abtriebswelle (22), die zum Aktivieren mindestens eines Arbeitswerkzeugs geeignet ist, wobei mindestens eine zweite Abtriebswelle (40, 60) parallel zur ersten Abtriebswelle (22) bereitgestellt ist, die zum Aktivieren mindestens eines weiteren Arbeitswerkzeugs geeignet ist, sowie Antriebskraftübertragungsmittel (24-27, 40, 41, 51, 52, 61, 62, 71, 72), die zwischen der Antriebswelle (21) und der zweiten Abtriebswelle (40, 60) angeordnet sind, wobei die Übertragungsmittel mindestens eine Antriebsriemenscheibe (24-27), die formschlüssig an der Antriebswelle (21) befestigt ist, und mindestens eine angetriebene Riemenscheibe (41, 42, 61, 62) umfassen, **gekennzeichnet durch** das Umfassen mindestens eines Paars der Antriebsriemenscheiben (24, 25; 26, 27), das mittels entsprechender flexibler Organe (51, 52; 71, 72) an ein entsprechendes Paar der angetriebenen Riemenscheiben (41, 42; 61, 62) angeschlossen ist, wobei die angetriebenen Riemenscheiben (41, 42; 61, 62) des Paares über Auswahlmittel (43, 63) wahlweise hinsichtlich der Rotation formschlüssig mit der zweiten Abtriebswelle (40, 60) gemacht werden.

2. Vorrichtung nach Anspruch 1, wobei die Auswahlmittel mindestens einen Überwurf (43, 63) umfassen, der hinsichtlich der Rotation formschlüssig und hinsichtlich der Translation frei mit der zweiten Abtriebswelle (40, 60) verbunden und mit frontalen Zähnen (44, 64) versehen ist, die zum Eingriff in entsprechende Sitze (45, 65) geeignet sind, welche an den angetriebenen Riemenscheiben (41, 42; 61, 62) realisiert sind, um die zweite Abtriebswelle in Rotation zu ziehen.

3. Vorrichtung (10) nach Anspruch 2, **dadurch gekennzeichnet, dass** sie Aktivierungsmittel (47, 67) umfasst, die zum Aktivieren des Überwurfs (43, 63) hinsichtlich der Translation entlang der zweiten Abtriebswelle (40, 60) von einer ersten Position, in der er mit einer der angetriebenen Riemenscheiben (41, 61) ineinandergreift, und einer zweiten Position, in der er mit der anderen der angetriebenen Riemenscheiben (42, 62) ineinandergreift, geeignet ist.

4. Vorrichtung (10) nach Anspruch 3, wobei die angetriebenen Riemenscheiben (41, 42; 61, 62) verschiedene Durchmesser aufweisen, so dass die Antriebswelle (21), wenn sie über eine der angetriebenen Riemenscheiben (41, 61) an die zweite Abtriebswelle (40, 60) angeschlossen ist, der zweiten Abtriebswelle eine erste Winkelgeschwindigkeit verleiht und, wenn sie über die andere der angetriebenen Riemenscheiben (42, 62) an die zweite Abtriebswelle (40, 60) angeschlossen ist, der zweiten Abtriebswelle eine zweite Winkelgeschwindigkeit verleiht, die sich von der ersten Winkelgeschwindigkeit unterscheidet.

5. Vorrichtung (10) nach Anspruch 4, wobei die erste und die zweite Winkelgeschwindigkeit der zweiten Abtriebswelle (40, 60) größer sind als die Winkelgeschwindigkeit der Antriebswelle (21), und zwar um einen Multiplikationsfaktor von 2 beziehungsweise 4,5.

6. Vorrichtung (10) nach Anspruch 1, wobei der Achsabstand zwischen der ersten Abtriebswelle (22) und der zweiten Abtriebswelle (40, 60) im Wesentlichen nicht weniger als 730 mm beträgt.

7. Vorrichtung (10) nach einem der vorhergehenden Ansprüche, **dadurch gekennzeichnet, dass** sie ein Paar aus zweiten Abtriebswellen (40, 60) parallel zur ersten Abtriebswelle (22) umfasst.

## Revendications

1. Dispositif de prise de force (10) connectable à un tracteur pourvu d'une prise de force, comprenant un châssis de support (11) qui peut être fixé à un tracteur et adapté pour supporter de manière rotative au moins un arbre d'entrée (21) adapté pour être entraîné par la prise de force du tracteur et au moins un arbre de sortie (22) adapté pour actionner au moins un outil, au moins un deuxième arbre de sortie (40, 60) étant pourvu parallèlement au premier arbre de sortie (22) et adapté pour actionner au moins un autre outil, et un moyen de transmission d'entraînement (24-27, 40, 41, 51, 52, 61, 62, 71, 72) interposé entre l'arbre d'entrée (21) et le deuxième arbre de sortie (40, 60), dans lequel le moyen de transmission comprend au moins une poulie d'entraînement (24-27) clavetée sur l'arbre d'entrée (21) et au moins une poulie entraînée (41, 42, 61, 62), **caractérisé en ce qu'**il comprend au moins une paire de poulies d'entraînement (24, 25 ; 26, 27) connectées à l'aide d'éléments flexibles correspondants (51, 52 ; 71, 72) à une paire de poulies entraînées respective (41, 42 ; 61, 62), les poulies entraînées (41, 42 ; 61, 62) de ladite paire étant solidarisées sélectivement en rotation avec le deuxième arbre de sortie (40, 60) via un moyen de sélection (43, 63).

2. Dispositif (10) selon la revendication 1, dans lequel le moyen de sélection comprend au moins un manchon (43, 63) associé solidement en rotation avec le deuxième arbre de sortie (40, 60) et libre en translation sur celui-ci, et pourvu de dents d'engrenage frontales (44, 64) adaptées pour s'engager avec des sièges respectifs (45, 65) réalisés sur les poulies entraînées (41, 42 ; 61, 62) pour entraîner le deuxième arbre de sortie en rotation.

3. Dispositif (10) selon la revendication 2, **caractérisé en ce qu'**il comprend un moyen d'actionnement (47, 67) adapté pour actionner le manchon (43, 63) en translation sur le deuxième arbre de sortie (40, 60) entre une première position dans laquelle il s'engrène avec l'une des poulies entraînées (41, 61) et une deuxième position dans laquelle il s'engrène avec l'autre desdites poulies entraînées (42, 62).

4. Dispositif (10) selon la revendication 3, dans lequel les poulies entraînées (41, 42 ; 61, 62) présentent différents diamètres de telle sorte que l'arbre d'entrée (21) imprime au deuxième arbre de sortie une première vitesse angulaire lorsqu'il est connecté au deuxième arbre de sortie (40, 60) via l'une des poulies entraînées (41, 61), et imprime au deuxième arbre de sortie une deuxième vitesse angulaire différente de la première vitesse angulaire lorsqu'il est connecté au deuxième arbre de sortie (40, 60) via l'autre desdites poulies entraînées (42, 62).

5. Dispositif (10) selon la revendication 4, dans lequel les première et deuxième vitesses angulaires du deuxième arbre de sortie (40, 60) sont supérieures à la vitesse angulaire de l'arbre d'entrée (21) conformément à un facteur de multiplication de respectivement 2 et 4,5.

6. Dispositif (10) selon la revendication 1, dans lequel l'entraxe entre le premier arbre de sortie (22) et le deuxième arbre de sortie (40, 60) est essentiellement supérieur ou égal à 730 mm.

7. Dispositif (10) selon l'une quelconque des revendications précédentes, **caractérisé en ce qu'**il comprend une paire de deuxièmes arbres de sortie (40, 60) parallèles au premier arbre de sortie (22).
